# DEMANDE DE BREVET EUROPEEN

(11) **EP 1 210 969 A1**
(43) Date de publication de la demande: **05.06.2002**
(21) Numéro de dépôt: 01440403.2
(22) Date de dépôt: 28.11.2001
(51) Int. Cl.: B01D 61/46, C02F 1/469

(54) **Cellule d'electrodialyse a membrane autoporteuse**

(30) Priorité: 28.11.2000 FR 0015328
(71) Demandeur: Alternative Marketing ayant pour sigle Alting S.A.R.L., 67610 La Wantzenau (FR)
(72) Inventeur: Gerard, Gérard, 67610 La Wantzenau (FR); Beaussier, Dominique, 03380 Quinssaines (FR)
(74) Mandataire: Rhein, Alain

(57) **Abrégé**

L'invention concerne une d'électrodialyse tubulaire (1) comportant une tête (8) et un pied (9) entre lesquels s'étend une membrane (5) tubulaire autoporteuse perméable aux ions rendue solidaire de la tête (8) et du pied (9) de la cellule (1) comportant une électrode tubulaire (11) reliée à une alimentation électrique et fixée à la tête (8).

Cette cellule (1) est caractérisée par le fait que la tête (8) comporte, intérieurement et du côté interne à la cellule (1), un insert (13) sur lequel est engagée et maintenue l'électrode (11), ledit insert (13) comportant deux canalisations (14, 15) de fluide électrolyte dont l'une (14) communique avec le volume interne (16) délimité par l'électrode (11) et débouche extérieurement à la cellule (1) tandis que l'autre (15) débouche extérieurement à la cellule (1) et dans le volume (17) délimité par la membrane (5) et l'électrode (11) au travers d'un orifice (18).

## Description

La présente invention a trait à une cellule d'électrodialyse tubulaire comportant une tête et un pied entre lesquels s'étend une membrane tubulaire autoporteuse perméable aux ions par ailleurs rendue solidaire de la tête et du pied de la cellule laquelle comporte, encore, intérieurement, une électrode tubulaire, d'une part, reliée à une alimentation en énergie électrique et, d'autre part, fixée à la tête de la cellule.

Cette invention concerne le domaine de la fabrication de cellules électrochimiques destinées à assurer la dialyse d'une solution, plus particulièrement celle pour le revêtement d'un métal par électrodéposition.

Il convient d'observer que pour assurer la présence de peinture sur une pièce métallique, notamment un élément de carrosserie, il est connu de plonger celle-ci dans un bain contenant des particules de peinture chargées.

Ladite pièce métallique est raccordée à une cathode de manière à attirer, sous l'influence d'un courant électrique, les particules de peinture chargées qui viennent, alors, se déposer sur ladite pièce pour revêtir cette dernière par électrodéposition.

Une telle électrodéposition libère, dans le bain, des ions H⁺ ayant pour effet d'augmenter la concentration en acide dudit bain au détriment de l'efficacité de la mise en peinture.

Aussi, il convient d'éliminer une partie au moins de ces ions H⁺ en assurant une dialyse de ce bain, ce qui peut être réalisé au travers de l'utilisation de cellules électrochimiques, plus particulièrement de cellules d'électrodialyse.

L'on connaît, d'ores et déjà, un certain nombre de ces cellules qui se présentent sous la forme d'une électrode, plus particulièrement une anode, entourée d'une membrane perméable aux ions. A l'intérieur de cette électrode et entre cette dernière et ladite membrane, il est assuré une circulation d'un fluide électrolyte, plus particulièrement un anolyte, notamment une solution acide. Ce fluide circule, tout d'abord, à l'intérieur de ladite électrode puis vient lécher ladite membrane au contact de laquelle ledit fluide s'enrichit en ions H⁺ avant d'être évacué hors de ladite cellule.

Selon un premier mode de réalisation, il est connu d'utiliser une membrane se présentant sous la forme d'une feuille très peu épaisse disposée à une certaine distance de ladite électrode. A ce propos, on observera qu'une telle membrane, plongée dans un liquide, a tendance à gonfler. Un tel gonflement présente un inconvénient consistant en ce que ladite membrane est susceptible d'entrer en contact avec l'électrode ce qui peut occasionner sa destruction.

Afin de remédier à un tel inconvénient, il a été développé des membranes dites autoporteuses définies par un tube en matériau poreux et résistant, intégrant des résines échangeuses d'ions.

Une telle cellule comporte une tête et un pied refermés par un couvercle duquel est rendue solidaire ladite électrode définissant, en combinaison avec ces couvercles, une structure rigide. Cette cellule comporte, encore, une membrane rendue solidaire de ladite tête et dudit pied par l'intermédiaire de moyens de montage. A ce propos, on observera qu'une telle membrane a tendance à s'allonger de sorte qu'il est indispensable de faire appel à des moyens de montage autorisant un déplacement relatif et étanche de cette membrane au moins par rapport à la tête et/ou au pied, de tels moyens de montage étant de conception particulièrement complexe.

On observera, en outre, que le pied et la tête de la cellule sont définis en un matériau synthétique sur lequel ladite membrane, définie en un autre matériau synthétique, doit être fixée. Ces différents matériaux synthétiques sont de nature différente de sorte qu'il doit être fait appel à des colles spécifiques et onéreuses pour rendre solidaire la membrane de la tête et du pied.

De plus, pour assurer une telle solidarisation, il est, usuellement, interposé un simple cordon de colle entre les surfaces des pièces à assembler. Ce cordon de colle subit l'attaque corrosive du fluide électrolyte ce qui provoque sa dégradation d'où résulte une fuite de fluide électrolyte hors de la cellule et/ou une pénétration, à l'intérieur de cette dernière, de peinture ou autre.

De plus, il convient d'alimenter ladite électrode en énergie électrique ce qui se fait, par exemple, par l'intermédiaire d'un câble électrique ou analogue traversant le couvercle de la tête et raccordé à ladite électrode par soudure. Cette dernière baigne, en fait, dans le fluide électrolyte qui présente un caractère corrosif susceptible de dégrader une telle soudure. Une telle dégradation s'accompagne de la libération, dans le fluide électrolyte, de certains composés chimiques, notamment métalliques, entrant dans la composition de cette soudure et susceptibles de polluer ce fluide électrolyte.

Un tel inconvénient se retrouve, également, dans le cas d'une cellule comportant un couvercle, d'une part, raccordé à un câble d'alimentation en énergie électrique notamment par l'intermédiaire d'un embout d'alimentation en fluide électrolyte associé à ce couvercle et, d'autre part, rendu solidaire d'une électrode au travers d'une soudure baignant, là encore, dans le fluide électrolyte.

Un autre mode de réalisation, connu au travers du document FR-2.682.890, consiste à fixer sur ladite électrode une tige émergeant hors de ladite cellule au travers d'un couvercle pour être raccordée à une source d'alimentation en énergie électrique. Cette tige réalise un contact électrique ponctuel avec ladite électrode de sorte qu'il apparaît, au niveau de cette dernière, des lignes de courant préférentielles susceptibles de nuire à l'homogénéité du processus d'électrolyse le long de la membrane, notamment du point de vue de la dispersion électrique et des échanges anioniques dans la zone intermédiaire entre la membrane et l'électrode.

On observera, en outre, que la tête d'une telle cellule d'électrodialyse peut comporter un manchon cylindrique rendu solidaire de ladite membrane, disposée, de manière coaxiale, à l'intérieur de ce manchon. Ce dernier comporte, usuellement, un embout latéral conçu apte à autoriser la circulation du fluide électrolyte et, plus particulièrement, à permettre l'évacuation de celui-ci. La présence de cet embout nécessite une conception particulière et complexe dudit manchon et, donc, de la tête de la cellule. Cet embout constitue, de plus, un organe particulièrement encombrant de sorte qu'il est, d'une part, particulièrement complexe d'implanter de telles cellules d'électrodialyse en batterie et, d'autre part, impossible de disposer celles-ci au fond d'une cuve de peinture.

En outre, cet embout constitue un organe particulièrement sensible aux chocs de sorte qu'il convient de prendre des précautions importantes lors de la production et des opérations de logistique ainsi que lors de la manipulation de la cellule ou d'une pièce à proximité de cette dernière.

La présente invention se veut à même d'apporter une solution aux problèmes des cellules d'électrodialyse de l'état de la technique.

A cet effet, la présente invention concerne une cellule d'électrodialyse tubulaire comportant une tête et un pied entre lesquels s'étend une membrane tubulaire autoporteuse perméable aux ions par ailleurs rendue solidaire de la tête et du pied de la cellule laquelle comporte, encore, intérieurement, une électrode tubulaire, d'une part, reliée à une alimentation en énergie électrique et, d'autre part, fixée à la tête de la cellule, caractérisée par le fait que la tête comporte, intérieurement et du côté interne à la cellule, un insert sur lequel est prévue apte à être engagée et maintenue l'électrode tubulaire, ledit insert comportant deux canalisations de fluide électrolyte, l'une de ces canalisations communiquant avec le volume interne délimité par l'électrode et débouchant extérieurement à la cellule au travers de la tête tandis que l'autre canalisation débouche, d'une part, extérieurement à la cellule et au travers de la tête et, d'autre part, dans le volume délimité par la membrane et l'électrode, ceci au travers d'un orifice que comporte cette dernière.

Une autre caractéristique consiste en ce que ledit insert comporte un flasque apte à coopérer avec une bride pour la fixation, de manière étanche, dudit insert sur la tête de la cellule.

Une autre caractéristique consiste en ce que l'une des canalisations est conçue apte à assurer l'alimentation de la cellule en fluide électrolyte tandis que l'autre est conçue apte à assurer l'évacuation de ce fluide, ladite canalisation d'évacuation présentant une section supérieure à celle de la canalisation d'alimentation.

Une caractéristique additionnelle consiste en ce que le débouché de l'une au moins desdites canalisations présente, extérieurement à la cellule, des moyens de réception d'un embout de raccordement à un circuit, selon le cas, d'alimentation ou d'évacuation de fluide électrolyte.

Selon une autre caractéristique ledit embout de raccordement est raccordé à un câble d'alimentation en énergie électrique.

Une caractéristique additionnelle concerne le fait que la cellule comporte des moyens aptes à assurer l'évacuation des gaz générés par le processus d'électrolyse, de tels moyens d'évacuation étant définis par un perçage réalisé, de manière traversante, dans l'électrode tubulaire, ceci à proximité, d'une part, dudit insert et, d'autre part, dudit orifice que comporte ladite électrode.

Une autre caractéristique de la présente invention consiste en ce que ladite tête de cellule comporte un manchon tubulaire externe à l'intérieur duquel est montée, de manière coaxiale, ladite électrode, ce manchon étant rendu solidaire, d'une part, dudit insert au travers de a bride de fixation et, d'autre part, de ladite membrane par des moyens de fixation.

Selon une caractéristique additionnelle, ledit manchon tubulaire comporte, au niveau de sa face interne orientée en direction de ladite électrode et sensiblement en regard de l'orifice de l'électrode définissant le débouché d'une canalisation, des moyens de déviation du flux de fluide électrolyte en direction dudit orifice.

Une caractéristique additionnelle consiste en ce que les moyens de fixation de la membrane sur le manchon tubulaire comportent un raccord, interposé entre ledit manchon et la membrane, et présentant des moyens définissant un réservoir de colle pour le collage de la membrane sur ledit raccord.

Selon une autre caractéristique, les moyens de fixation de la membrane sur le manchon tubulaire comportent des moyens définissant un réservoir de colle pour le collage de la membrane.

Une caractéristique additionnelle consiste en ce que les moyens de fixation de la membrane sur la manchon comportent un raccord, d'une part, rendu solidaire dudit manchon tubulaire par l'intermédiaire d'un tube de raccordement et, d'autre part, pourvu d'une gorge annulaire périphérique définissant un réservoir de colle.

Selon une autre caractéristique, la cellule d'électrodialyse comporte des moyens de centrage de l'électrode tubulaire à l'intérieur de la membrane, ces moyens de centrage étant définis par un tube de centrage s'étendant, de manière coaxiale, à l'intérieur de ladite électrode tubulaire et rendu solidaire du pied par des moyens de montage.

Une caractéristique additionnelle concerne le fait que la cellule comporte des moyens aptes à conférer au flux de fluide électrolyte un mouvement tourbillonnant à sa sortie dudit tube de centrage, ces moyens se présentant sous la forme d'au moins un orifice traversant ménagé en biais au niveau des moyens de montage.

Selon une autre caractéristique le pied comporte, d'une part, un manchon tubulaire rendu solidaire de ladite membrane et, d'autre part, un embout recevant lesdits moyens de montage du tube de centrage et raccordé audit manchon tubulaire par l'intermédiaire d'un tube de raccordement.

En fait, la membrane est rendue solidaire du pied par l'intermédiaire de moyens de fixation comportant des moyens aptes à définir une réserve de colle.

Une autre caractéristique consiste en ce que les moyens de fixation comportent une embase annulaire, d'une part, disposée de manière coaxiale à l'intérieur du pied et rendue solidaire de ce dernier et, d'autre part, sur laquelle vient s'emmancher ladite membrane et, d'autre part encore, comportant une gorge annulaire définissant une réserve de colle.

Les avantages de la présente invention consistent en ce que l'engagement et le maintien dudit insert dans ladite électrode, permet de réaliser un assujettissement sans l'apport d'une soudure susceptible de subir des détériorations sous l'effet d'un fluide électrolyte.

De plus, un tel engagement autorise un contact avec ladite électrode sur tout le pourtour de cet insert ce qui permet d'assurer une conduction homogène de l'électricité en l'absence de lignes de courant préférentielles.

Cet insert présente des canalisations débouchant extérieurement à la cellule et au niveau de la tête de cette dernière ce qui autorise la mise en place, directement au niveau dudit insert, d'embouts pour le raccordement de ladite cellule d'électrodialyse à une source de fluide électrolyte et à des moyens de récupération de ce dernier une fois enrichi.

De plus, un tel embout de raccordement peut recevoir un câble électrique relié à une source d'énergie électrique.

La présente invention permet, avantageusement, de regrouper au niveau dudit insert tous les moyens de raccordement aux circuits électrique et de fluide électrolyte. Ceci autorise, également, le regroupement des conduits du circuit de fluide électrolyte et dudit câble électrique au sein d'un même faisceau et au niveau de la tête de la cellule.

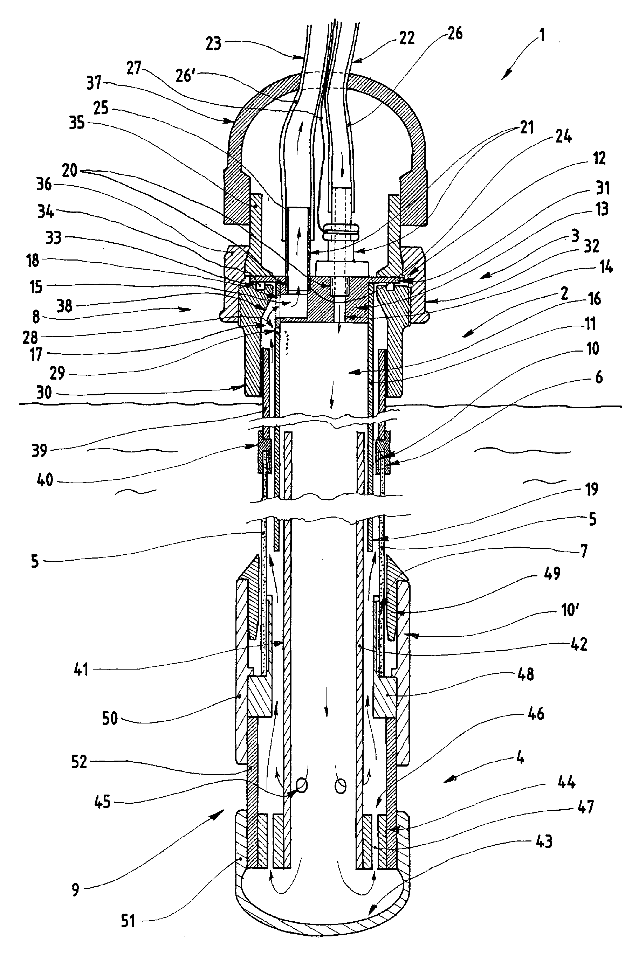

La présente invention est exposée plus en détail dans la description qui va suivre se rapportant à un mode de réalisation donné à titre d'exemple et illustré dans la figure unique du dessin en annexe correspondant à une vue schématisée et en coupe longitudinale d'une cellule d'électrodialyse.

La présente invention concerne le domaine de la fabrication des cellules électrochimiques destinées à assurer la dialyse d'une solution. Cette dernière consiste, plus particulièrement, en un bain contenant des particules de peinture chargées pour le revêtement d'un métal, notamment un élément de carrosserie, par électrodéposition.

Tel qu'il ressort de la figure du dessin en annexe, une telle cellule d'électrodialyse 1 adopte la forme d'un corps tubulaire 2, de préférence cylindrique, et présente deux extrémités 3, 4 qui, dans un sens d'orientation usuel mais non restrictif d'une telle cellule 1, constituent, respectivement, l'extrémité supérieure 3 et l'extrémité inférieure 4 de cette cellule 1.

Une telle cellule d'électrodialyse 1 comporte une membrane 5 perméable aux ions et adoptant une forme tubulaire, de préférence cylindrique. Cette membrane 5 est de type autoporteuse et est constituée par un tube rigide obtenu, par exemple, par extrusion d'un matériau synthétique.

Cette membrane 5 présente deux extrémités 6, 7 dont l'une 6 coopère avec une tête 8 que comporte ladite cellule 1 au niveau de son extrémité supérieure 3. L'autre extrémité 7 de cette membrane 5 coopère avec un pied 9 que comporte ladite cellule 1 au niveau de son extrémité inférieure 4.

En fait, ladite membrane 5 s'étend entre la tête 8 et le pied 9 de la cellule 1 et est rendue solidaire de ces derniers 8, 9 par l'intermédiaire de moyens de fixation 10, 10'.

Ladite cellule d'électrodialyse 1 comporte, encore, une électrode tubulaire 11 montée à l'intérieur dudit corps tubulaire 2 de la cellule 1, ceci de préférence de manière coaxiale à ladite membrane 5.

Cette électrode tubulaire 11 est, d'une part, reliée à une alimentation en énergie électrique et, d'autre part, rendue solidaire, par l'intermédiaire de moyens de fixation 12, de la tête 8 de la cellule 1. Ladite électrode tubulaire 11 est définie en un matériau métallique, de préférence en un acier inoxydable, ceci notamment par extrusion.

Selon l'invention, la tête 8 de cette cellule 1 comporte un insert 13 disposé intérieurement à ladite tête 8 et du côté interne à la cellule 1. Un tel insert 13 est défini en un matériau conducteur apte à conduire le courant électrique, plus particulièrement un matériau métallique ou un alliage métallique. En fait et selon un mode de réalisation préféré de l'invention, ledit insert 13 est défini en acier.

Sur cet insert 13 est prévue apte à être engagée et maintenue ladite électrode tubulaire 11.

A ce propos, on observera que cet insert 13 est, de préférence, engagé de manière coaxiale et serrée à l'intérieur de ladite électrode 11.

Un premier mode de réalisation concerne le fait que l'engagement de ladite électrode tubulaire 11 sur ledit insert 13 est réalisé en force.

Un autre mode de réalisation concerne le fait que l'engagement de ladite électrode tubulaire 11 est réalisé à chaud, notamment après avoir assuré un chauffage de cette électrode 11.

Cependant et selon un mode préféré de réalisation, ladite électrode tubulaire 11 est engagée par vissage sur ledit insert 13.

Selon l'invention, le maintien de ladite électrode tubulaire 11 sur ledit insert 13 est assuré par tout moyen approprié, à l'exclusion de la soudure.

Ainsi, un tel maintien peut être assuré, au moins en partie, au travers de l'engagement à chaud ou au travers du vissage de l'insert 13 tel qu'évoqué ci-dessus.

Tel que visible sur la figure en annexe, ledit insert 13 comporte deux canalisations 14, 15 aptes à véhiculer un fluide électrolyte.

En fait, la première 14 de ces canalisations communique avec le volume interne 16 délimité par l'électrode 11 et débouche extérieurement à la cellule 1 au travers de la tête 8.

La seconde canalisation 15 débouche, d'une part, extérieurement à la cellule 1 et au travers de la tête 8 et, d'autre part, dans le volume 17 délimité par la membrane 5 et l'électrode 11, ceci au travers d'un orifice 18 que comporte cette électrode 11.

A ce propos, on observera que cet orifice 18 est réalisé par perçage, de préférence, après assujettissement de l'insert 13 et de l'électrode tubulaire 11.

Tel que visible sur la figure en annexe, le fluide électrolyte pénètre dans la cellule 1 au travers de la première canalisation 14 et s'écoule dans le volume interne 16 de l'électrode 11 en direction du pied 9 et de l'extrémité inférieure 19 de cette électrode 11.

Ce fluide s'écoule, alors, hors de ladite électrode 11 et remonte en direction de la tête 8 de la cellule 1. A ce niveau, ledit fluide coule dans le volume 17 délimité par ladite électrode 11 et la membrane 5 et s'enrichit en ions au contact de cette dernière 5.

Ledit fluide traverse, alors, l'orifice 18 que comporte ladite électrode 11 pour s'écouler dans la seconde canalisation 15 conçue apte à assurer l'évacuation dudit fluide électrolyte chargé en ions. Ce dernier est, alors, évacué hors de la cellule 1 au travers dudit insert 13.

A ce propos, on observera que ladite canalisation 15 d'évacuation présente une section supérieure à celle de la canalisation d'alimentation 14. Un tel mode de réalisation permet de faciliter l'écoulement du fluide hors de la cellule 1 et d'abaisser la pression de ce dernier à sa sortie de la cellule 1.

Ceci permet, également, d'éviter, au niveau de la tête 8, une accumulation de gaz résultant de l'électrolyse en favorisant leur évacuation.

Selon une autre caractéristique, le débouché de l'une au moins desdites canalisations 14, 15 présente, extérieurement à la cellule 1, des moyens de réception 20 d'un embout 21 de raccordement à un circuit, selon le cas, d'alimentation 22 et/ou d'évacuation 23 de fluide électrolyte.

Tel que visible sur la figure, de tels moyens de réception 20 peuvent, par exemple, être définis par un alésage 24 approprié du débouché d'une canalisation 15, un tel alésage 24 étant susceptible d'autoriser un engagement, de manière serrée, d'un embout de raccordement 21 constitué, par exemple, par un tube 25, notamment en inox, sur lequel est emmanché un conduit 26, notamment de type flexible, que comporte le circuit 23 d'évacuation du fluide électrolyte.

Selon un autre mode de réalisation, de tels moyens de réception 20 peuvent être constitués par un taraudage du débouché de la canalisation 14 apte à coopérer avec le filetage d'un embout de raccordement 21, notamment en inox, sur lequel est, là encore, emmanché un conduit 26', notamment flexible, que comporte le circuit 22 d'alimentation en fluide électrolyte.

Tel que visible sur cette figure, un tel embout de raccordement 21 peut, de manière avantageuse, être raccordé à un câble 27 d'alimentation en énergie électrique. Ce dernier présente, alors, une extrémité soudée sur une rondelle, d'une part, engagée sur ledit embout 21 et, d'autre part, immobilisée sur ce dernier par l'intermédiaire d'au moins un écrou (de préférence deux écrous disposés de part et d'autre de ladite rondelle comme visible sur la figure) apte à coopérer avec un filetage que présente ledit embout 21.

Un tel mode de réalisation permet de relier ledit insert 13 ainsi que ladite électrode tubulaire 11 à une alimentation en énergie électrique. Ledit embout de raccordement 21 est, alors, défini en un matériau conducteur, notamment un acier inoxydable.

Il convient d'observer que le processus d'électrolyse conduit à la formation de gaz, notamment de l'oxygène, qui ont tendance à s'accumuler à l'intérieur des cellules d'électrodialyse de l'état de la technique. En fait, ces gaz sont, généralement, produits à l'intérieur de ladite électrode tubulaire et s'accumulent en partie supérieure de celle-ci. Une telle accumulation de gaz représente un risque potentiel d'explosion susceptible de détruire une telle cellule.

A cet effet et selon une caractéristique additionnelle de la présente invention, ladite cellule d'électrodialyse 1 comporte, encore, des moyens 28 aptes à assurer l'évacuation des gaz générés par le processus d'électrolyse.

De tels moyens d'évacuation 28 sont définis par un perçage 29 réalisé, de manière traversante, dans l'électrode tubulaire 11, ceci à proximité, d'une part, dudit insert 13 et, d'autre part, dudit orifice 18 d'évacuation du fluide électrolyte.

On observera que ledit perçage 29 est de faible diamètre, de préférence de l'ordre de 2mm.

Selon une autre caractéristique de la présente invention, la tête 8 de cellule 1 comporte un manchon tubulaire externe 30 à l'intérieur duquel est montée, de manière coaxiale, ladite électrode 11.

Ce manchon tubulaire 30 est, de préférence, défini en un matériau synthétique, notamment du PVC, et est rendu solidaire dudit insert 13.

A ce propos, il convient d'observer que cet insert 13 comporte un flasque 31 apte à coopérer avec une bride 32 pour la fixation, de manière étanche, dudit insert 13 sur la tête 8 de la cellule 1, plus particulièrement sur ledit manchon 30.

Tel que visible sur la figure, un tel flasque 31 est conçu apte à prendre appui sur une surface d'appui 33, de préférence annulaire, que présente la tête 8 de la cellule 1, notamment au niveau dudit manchon 30.

A ce propos, on observera que cette prise d'appui sur la surface 33 se fait de manière étanche, plus particulièrement au travers d'un joint d'étanchéité 34 interposé entre ledit insert 13 et ledit manchon 30.

Selon un mode de réalisation préféré, ladite bride 32 de fixation de l'insert 13 est du type écrou et est apte à coopérer avec une portion de type vis que présente la tête 8 de la cellule 1, plus particulièrement au niveau de la face externe dudit manchon 30.

Tel que visible sur la figure du dessin en annexe, ladite bride de fixation 32 est définie, d'une part, par un manchon 35 de forme évasée et, d'autre part, par une bague 36 engagée par dessus ledit manchon 35.

Ce dernier 35 est conçu apte à prendre appui sur ledit insert 13 et est maintenu dans cette position d'appui sous l'effet de la coopération entre une portion de type écrou que comporte ladite bague 36 et une portion de type vis que comporte ledit manchon tubulaire 30. Dans cette position, ledit insert 13 prend lui-même appui sur la surface 33 de la tête 8 de la cellule 1 pour sa fixation sur celle-ci.

On observera que par-dessus ledit manchon 35 de la bride de fixation 32 est engagé, notamment de manière étanche, un capuchon 37 définissant un presse-étoupe traversé par les conduits 26, 26' d'alimentation et d'évacuation du fluide électrolyte ainsi que par le câble 27 d'alimentation en énergie électrique.

Selon une autre caractéristique, le manchon tubulaire 30 de la tête 8 de la cellule 1 comporte, au niveau de sa face interne orientée en direction de ladite électrode 11, des moyens 38 aptes à assurer la déviation du flux de fluide électrolyte en direction dudit orifice 18 de l'électrode tubulaire 11. La présence de ces moyens 38 de déviation permet d'orienter, en direction dudit orifice 18, le flux de fluide électrolyte de manière à faciliter l'évacuation de ce dernier au travers de l'insert 13.

On observera que ces moyens de déviation 38 sont situés sensiblement en regard de l'orifice 18 de l'électrode 11 constituant le débouché d'une canalisation 15 et sont, de préférence, définis par une conformation particulière de la surface interne dudit manchon 30 apte à constituer un déflecteur.

Un tel déflecteur est, de préférence, ménagé sur tout le pourtour interne dudit manchon 30 de manière à autoriser une implantation coaxiale dudit insert 13 à l'intérieur dudit manchon 30, ceci indépendamment de son orientation angulaire par rapport à ce dernier.

Tel que visible sur la figure du dessin en annexe, ledit manchon tubulaire 30 de la tête 8 de la cellule 1 est rendu solidaire de ladite membrane 5 par l'intermédiaire d'un tube de raccordement 39 tubulaire engagé à l'intérieur dudit manchon 30 et rendu solidaire de ce dernier par collage. Ce tube de raccordement 39, notamment en PVC, est destiné à recevoir des moyens (non représentés) conçus aptes à assurer la fixation de ladite cellule 1 sur un support.

On observera que, entre ledit tube de raccordement 39 et ladite membrane 5, est interposé un raccord 40, notamment en PVC, collé sur ledit tube de raccordement 39. Ce raccord 40 comporte une rainure en « U » à l'intérieur de laquelle est engagée ladite membrane 5. Cette rainure en « U » présente, intérieurement, une gorge annulaire périphérique définissant un réservoir de colle apte à assurer une fixation appropriée de ladite membrane 5 sur le raccord 40.

Ainsi, ladite membrane 5 est rendue solidaire du manchon tubulaire 30 de la tête 8 de la cellule 1, ceci par l'intermédiaire de moyens de fixation 10 qui comportent ledit tube de raccordement 39 ainsi que ledit raccord 40.

Selon une autre caractéristique de la présente invention, ladite cellule d'électrodialyse comporte des moyens 41 aptes à assurer le centrage de ladite électrode tubulaire 11 à l'intérieur de ladite membrane 5.

De tels moyens de centrage 41 permettent, en fait, d'éviter à ladite électrode tubulaire 11 d'entrer en contact avec ladite membrane 5, sachant qu'un tel contact serait susceptible de détériorer cette membrane 5. En fait, de tels moyens de centrage 41 permettent non seulement d'éviter un tel contact lors de la mise en place de ladite électrode 11 à l'intérieur de la membrane 5 mais également après assemblage de ladite cellule 1, au cours du transport, de la manipulation et du fonctionnement de cette dernière.

A ce propos, on observera que ces moyens de centrage 41 constituent, encore, des moyens de guidage de ladite électrode 11, notamment lors de la mise en place de cette dernière 11 dans la cellule 1.

Tel que visible sur la figure, de tels moyens de centrage 41 sont définis par un tube de centrage 42 s'étendant, de manière coaxiale, à l'intérieur de ladite électrode tubulaire 11. Ce tube de centrage 42 s'étend en direction de la tête 8 de la cellule 1 et est rendu solidaire du pied 9 de cette dernière, d'une part, à une certaine distance d'un fond 43 que présente ledit pied 9 et, d'autre part, par l'intermédiaire de moyens de montage 44. Ces derniers adoptent, en fait, la forme d'une couronne à l'intérieur de laquelle est montée l'extrémité dudit tube de centrage 42.

En fait, ce tube de centrage 42 s'étend, au moins en partie, à l'intérieur du volume interne 16 de ladite électrode 11. Il en résulte qu'une partie au moins du fluide électrolyte s'écoule à l'intérieur de ce tube 42. Ce dernier est, alors, pourvu d'au moins un orifice 45 autorisant l'écoulement de ce fluide hors dudit tube 42.

Selon une autre caractéristique, ladite cellule d'électrodialyse 1 comporte des moyens 46 aptes à conférer audit flux de fluide électrolyte un mouvement tourbillonnant à sa sortie dudit tube de centrage 42.

De tels moyens 46 se présentent sous la forme d'au moins un orifice 47 supplémentaire et traversant ménagé en biais au niveau de la couronne des moyens de montage 44.

Selon une autre caractéristique de la présente invention, la membrane 5 est rendue solidaire du pied 9 (défini en un matériau synthétique, notamment du PVC) de la cellule d'électrodialyse 1 par l'intermédiaire de moyens de fixation 10'.

De tels moyens de fixation 10' adoptent la forme d'une embase annulaire 48, d'une part, disposée de manière coaxiale à l'intérieur du pied 9 et rendue solidaire de ce dernier et, d'autre part, au travers de laquelle est engagée ledit tube de centrage 42. Cette embase 48 présente un prolongement axial sur lequel vient s'emmancher ladite membrane 5 et s'étendant, intérieurement à cette dernière, et en direction de la tête 8 de la cellule 1. Ce prolongement comporte une gorge annulaire orientée en direction de la membrane 5 et définissant une réserve de colle pour la fixation de cette dernière 5.

Ces moyens de fixation 10' comportent, encore, des moyens 49 aptes à centrer ladite membrane 5 à l'intérieur dudit pied 9, de tels moyens de centrage 49 étant définis par une couronne annulaire destinée à être emmanchée par dessus ladite membrane 5 et disposée entre cette dernière et la paroi latérale du pied 9.

En fait, entre les différents éléments de ces moyens de fixation 10' (embase 48, paroi latérale du pied 9, moyens de centrage 49) et entre ces derniers et ladite membrane 5 est disposée une colle apte à assurer une immobilisation de ladite membrane 5 sur la pied 9.

Selon une autre caractéristique de l'invention, le pied 9 de la cellule 1 comporte, d'une part, un manchon tubulaire 50 rendu solidaire de ladite membrane 5 par l'intermédiaire desdits moyens de fixation 10' et, d'autre part, un embout 51 recevant lesdits moyens de montage 44 du tube de centrage 42. Cet embout 51 est raccordé audit manchon tubulaire 50 par l'intermédiaire d'un tube de raccordement 52, notamment en PVC.

En fait, ce tube de raccordement 52 est conçu apte à tenir compte de variations de longueur de la membrane 5 (sèche ou hydratée) par rapport à la longueur de l'électrode tubulaire 11 susceptible, sous l'effet de ces variations, de s'engager au travers de l'embase 48 des moyens de fixation 10' ladite membrane 5.

## Revendications

1. Cellule d'électrodialyse tubulaire (1) comportant une tête (8) et un pied (9) entre lesquels s'étend une membrane (5) tubulaire autoporteuse perméable aux ions par ailleurs rendue solidaire de la tête (8) et du pied (9) de la cellule (1) laquelle comporte, encore, intérieurement, une électrode tubulaire (11), d'une part, reliée à une alimentation en énergie électrique et, d'autre part, fixée à la tête (8) de la cellule (1), **caractérisée par le fait que** la tête (8) comporte, intérieurement et du côté interne à la cellule (1), un insert (13) sur lequel est prévue apte à être engagée et maintenue l'électrode tubulaire (11), ledit insert (13) comportant deux canalisations (14, 15) de fluide électrolyte, l'une (14) de ces canalisations communiquant avec le volume interne (16) délimité par l'électrode (11) et débouchant extérieurement à la cellule (1) au travers de la tête (8) tandis que l'autre (15) canalisation débouche, d'une part, extérieurement à la cellule (1) et au travers de la tête (8) et, d'autre part, dans le volume (17) délimité par la membrane (5) et l'électrode (11), ceci au travers d'un orifice (18) que comporte cette dernière (11).

2. Cellule d'électrodialyse (1) selon la revendication 1, **caractérisée par le fait que** ledit insert (13) comporte un flasque (31) apte à coopérer avec une bride (32) pour la fixation, de manière étanche, dudit insert (13) sur la tête (8) de la cellule (1).

3. Cellule d'électrodialyse (1) selon l'une quelconque des revendications 1 ou 2, **caractérisée par le fait que** l'une (14) des canalisations est conçue apte à assurer l'alimentation de la cellule en fluide électrolyte tandis que l'autre (15) est conçue apte à assurer l'évacuation de ce fluide, ladite canalisation d'évacuation (15) présentant une section supérieure à celle de la canalisation d'alimentation (14).

4. Cellule d'électrodialyse (1) selon l'une quelconque des revendications précédentes, **caractérisée par le fait que** le débouché de l'une au moins desdites canalisations (14, 15) présente, extérieurement à la cellule (1), des moyens (20) de réception d'un embout de raccordement (21) à un circuit, selon le cas, d'alimentation ou d'évacuation de fluide électrolyte.

5. Cellule d'électrodialyse (1) selon la revendication 4, **caractérisée par le fait que** ledit embout de raccordement (21) est raccordé à un câble (27) d'alimentation en énergie électrique.

6. Cellule d'électrodialyse (1) selon l'une quelconque des revendications précédentes, **caractérisée par le fait qu'**elle comporte des moyens (28) aptes à assurer l'évacuation des gaz générés par le processus d'électrolyse, lesdits moyens d'évacuation (28) étant définis par un perçage (29) réalisé, de manière traversante, dans l'électrode tubulaire (11), ceci à proximité, d'une part, dudit insert (13) et, d'autre part, dudit orifice (18) que comporte ladite électrode tubulaire (11).

7. Cellule d'électrodialyse (1) selon la revendication 2, **caractérisée par le fait que** ladite tête (8) de cellule (1) comporte un manchon (30) tubulaire externe à l'intérieur duquel est montée, de manière coaxiale, ladite électrode (11), ce manchon (30) étant rendu solidaire, d'une part, dudit insert (13) au travers de la bride de fixation (32) et, d'autre part, de ladite membrane (5) par des moyens de fixation (10).

8. Cellule d'électrodialyse (1) selon la revendications 7, **caractérisée par le fait que** ledit manchon tubulaire (30) comporte, au niveau de sa face interne orientée en direction de ladite électrode (11) et sensiblement en regard de l'orifice (18) de l'électrode (11) définissant le débouché d'une canalisation (14, 15), des moyens (38) de déviation du flux de fluide électrolyte en direction dudit orifice (18).

9. Cellule d'électrodialyse (1) selon l'une quelconque des revendications 7 ou 8, **caractérisée par le fait que** les moyens de fixation (10) de la membrane (5) sur le manchon tubulaire (30) comportent des moyens définissant un réservoir de colle pour le collage de la membrane (5).

10. Cellule d'électrodialyse (1) selon la revendications 9, **caractérisée par le fait que** les moyens de fixation (10) de la membrane (5) sur la manchon (30) comportent un raccord (40), d'une part, rendu solidaire dudit manchon tubulaire (30) par l'intermédiaire d'un tube de raccordement (39) et, d'autre part, pourvu d'une gorge annulaire périphérique définissant un réservoir de colle.

11. Cellule d'électrodialyse (1) selon l'une quelconque des revendications précédentes, **caractérisée par le fait qu'**elle comporte des moyens de centrage (41) de l'électrode tubulaire (11) à l'intérieur de la membrane (5), ces moyens de centrage (41) étant définis par un tube de centrage (42) s'étendant, de manière coaxiale, à l'intérieur de ladite électrode tubulaire (11) et rendu solidaire du pied (9) par des moyens de montage (44).

12. Cellule d'électrodialyse (1) selon la revendication 11, **caractérisée par le fait qu'**elle comporte des moyens (46) aptes à conférer au flux de fluide électrolyte un mouvement tourbillonnant à sa sortie dudit tube de centrage (42), ces moyens (46) se présentant sous la forme d'au moins un orifice (47) traversant ménagé en biais au niveau des moyens de montage (44).

13. Cellule d'électrodialyse (1) selon l'une quelconque des revendications 11 ou 12, **caractérisée par le fait que** le pied (9) comporte, d'une part, un manchon tubulaire (50) rendu solidaire de ladite membrane (5) et, d'autre part, un embout (51) recevant lesdits moyens de montage (44) du tube de centrage (42) et raccordé audit manchon tubulaire (50) par l'intermédiaire d'un tube de raccordement (52).

14. Cellule d'électrodialyse (1) selon l'une quelconque des revendications précédentes, **caractérisée par le fait que** l'engagement de ladite électrode tubulaire (11) sur ledit insert (13) est réalisé en force, à chaud ou par vissage.
